# EUROPEAN PATENT SPECIFICATION

(11) **EP 4 592 663 B1**
(45) Date of publication and mention of the grant of the patent: **15.07.2026**
(21) Application number: 25154504.2
(22) Date of filing: 28.01.2025
(51) Int. Cl.: G01M 17/007

(54) **VEHICULAR TEST SYSTEM AND CONTROL METHOD**
FAHRZEUGPRÜFSYSTEM AND KONTROLLSYSTEM
SYSTEME D'ESSAI DE VEHICULE ET SYSTÈME DE CONTRÔLE

(30) Priority: 29.01.2024 IT 202400001665
(43) Date of publication of application: 30.07.2025
(73) Proprietor: IVECO S.P.A., 10156 Torino (IT)
(72) Inventor: ODDONE, Paolo, 10156 Torino (IT)
(74) Representative: Studio Torta S.p.A.

(56) References cited:
- CN-A- 110 412 386
- CN-U- 205 460 603
- CN-U- 212 284 063
- CN-U- 214 277 295

## Description

### TECHNICAL SECTOR

The present invention relates to a safety system, in particular a fire-fighting safety system for a vehicular test system.

The present invention has its preferred, although not exclusive, application in a test system for electric traction vehicles. Reference will be made to this application below by way of an example.

### PRIOR ART

Land vehicles must be tested in order to be able to perform relative analyses on compliance with the requirements expressed in national and international regulations.

It is therefore known to provide test systems, normally comprising roller beds that allow operation of the vehicle traction system, i.e. the wheels, when the vehicle is at a standstill.

These test systems have historically been provided for internal combustion engine traction systems. Thus, fire-fighting systems are present that are provided with sprayers, positioned on the ceiling of the space in which said test systems are installed and are normally used in rare cases.

In fact, even if the thermal combustion engine has malfunctions, the occurrence of the vehicle catching fire is rare.

The situation is different for electric traction vehicles. As known, such vehicles are provided with batteries adapted to exchange electric energy with the electrical machines adapted to allow generation of the torque to move the wheels or, vice versa, of electrical energy absorbing torque from the wheels.

During tests, these electric batteries can suffer an electrochemical phenomenon known as "thermal runaway", due to which there is a much greater probability of the vehicle catching fire than for traditional vehicles.

Furthermore, these batteries are normally housed in a lowered position of the vehicle, for example underneath the side members or between them, and thus are hard to reach with the sprayers positioned on the ceiling of the space housing the test system.

It is therefore difficult to extinguish a fire caused by a thermal runaway of the vehicle batteries in a test system by means of the known safety systems.

Example of known systems that however are still suffering of the above problems are disclosed in patent publications CN110412386A, which discloses a vehicle burning test bench with a fire extinguishing system, CN205460603 U, CN212284063 U or CN214277295 U.

There is therefore a need to provide efficient safety systems for test systems so as to solve the aforesaid problems.

The object of the present invention is therefore to satisfy the needs indicated here above, in an optimal and economical manner.

### SUMMARY OF THE INVENTION

The aforesaid object is achieved by a safety system, a test system as claimed in the attached claims, which form an integral part of the present description.

### BRIEF DESCRIPTION OF THE DRAWINGS

For a better understanding of the present invention, a preferred embodiment is described below, by way of non-limiting example, with reference to the appended drawings, in which:

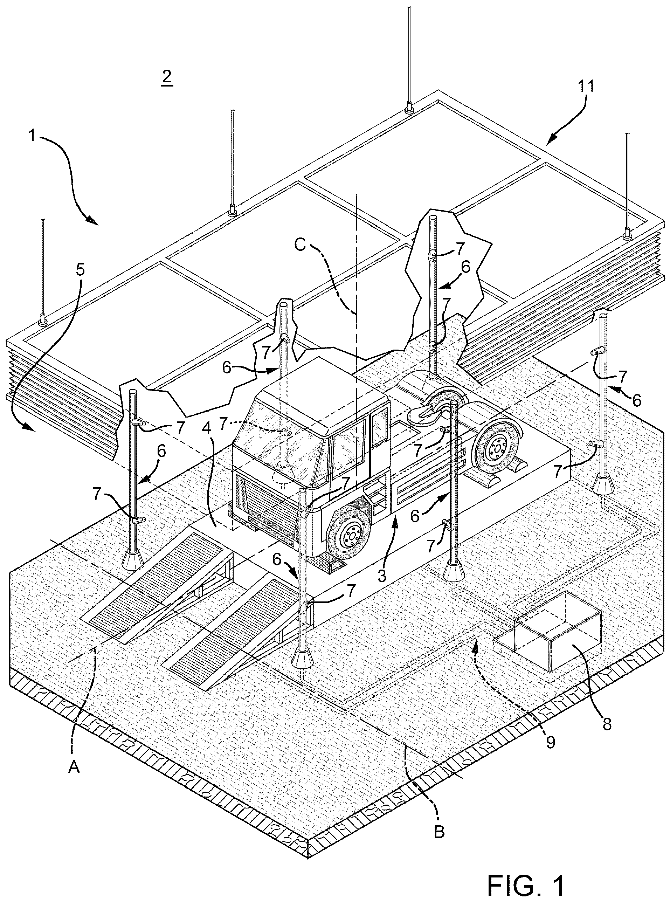

- Figure 1 is a perspective view of a test system provided with a safety system according to the invention in a first operating condition; and

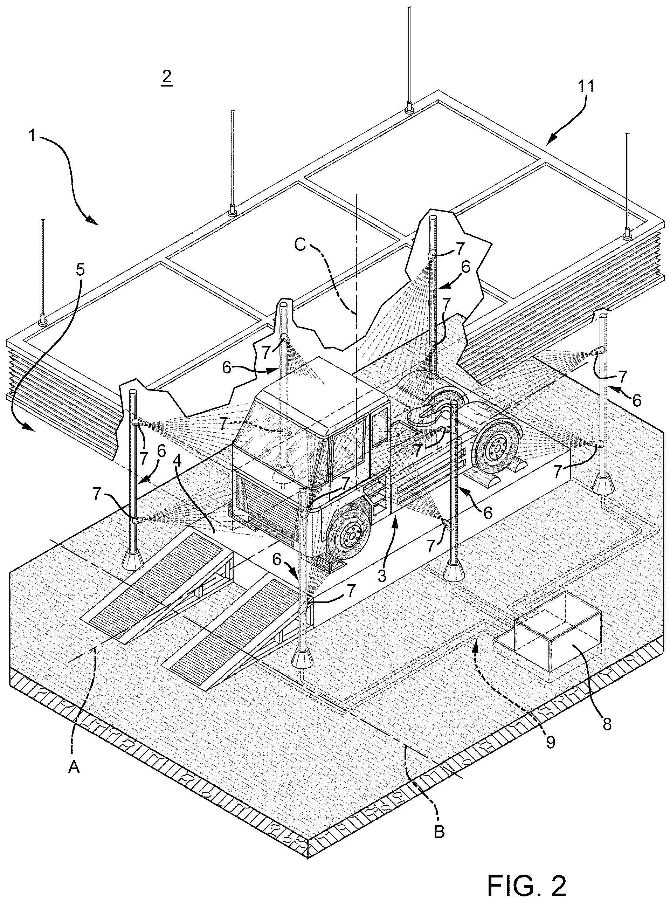

- Figure 2 is a perspective view of a test system provided with a safety system according to the invention in a second operating condition.

### DETAILED DESCRIPTION OF THE INVENTION

In the attached figures, a test system 1 housed in a space 2 of a building (not shown) is shown. The test system 1 is configured to test a vehicle 3 of the land type, such as a truck, a lorry, a bus, a commercial vehicle or another type.

The vehicle 3 extends along a longitudinal axis A, a transversal axis B perpendicular to the longitudinal axis A and a vertical axis C perpendicular to both.

In particular, such vehicle 3 is of the electric traction type, comprises, i.e. is provided with batteries adapted to exchange electric energy with the electrical machines adapted to allow generation of the torque to move the wheels or, vice versa, of electrical energy absorbing torque from the wheels.

The test system 1 comprises a platform 4 configured to support the vehicle 3, so that, when its wheels are placed in rotation by the traction system of the vehicle 3, it maintains the vehicle 3 at a standstill with respect to the platform 4. For example, therefore, such platform 4 can be a roller platform.

According to the invention, the test system 1 comprises a fire-fighting system 5 configured to spray a fire-fighting fluid, such as water, around every direction of the vehicle 3 around the platform 4.

In particular, the fire-fighting system 5 is configured to supply the atomised fire-fighting fluid, i.e. in the form of mist, around the vehicle 3.

In greater detail, the fire-fighting system 5 is configured to supply the fire-fighting fluid by spraying it on the various supply points along the longitudinal, transversal and vertical axis A, B, C, with respect to the vehicle 3.

In particular, in the example of an embodiment shown, the fire-fighting system 5 comprises a plurality of distribution columns 6 positioned around the vehicle.

In the example of an embodiment shown, three distribution columns 6 positioned per side with respect to the longitudinal axis A of the vehicle 3 are depicted. In particular, in the embodiment described, these distribution columns 6 are supported by a floor outside of the platform 4.

These distribution columns 6 carry, along the vertical axis C, a plurality of nozzles 7 configured to spray a fire-fighting fluid.

In particular, in the example of an embodiment shown, two nozzles 7 per distribution column 6 are depicted, vertically distanced from each other, one positioned at the height of the roof of the vehicle cabin and one positioned at the height of the vehicle chassis or underneath it.

Advantageously, adjustment means (not shown) can be provided to vary the position of the nozzles 7 along the distribution column 6.

In greater detail, the nozzles 7 are nozzles of the supersonic type, i.e. configured to spray the fire-fighting fluid at high speed.

Advantageously, the nozzles 7 are high-pressure nozzles, i.e. configured to function at a predefined pressure, for example preferably comprised between 180 and 220 bar, in particular 200 bar.

The safety system 2 further comprises a source of fire-fighting fluid 8 that can comprise (not shown) compressor means configured to suck a fire-fighting fluid from a source, such as a tank or a fluid intake, pressurise it and supply it to the nozzles 7 at the aforesaid predefined pressure.

Consequently, the safety system 2 comprises a hydraulic circuit configured to fluidly connect the nozzles 7 to the source of fire-fighting fluid 8 in order to supply said fire-fighting fluid under pressure.

The fire-fighting fluid sprayed by the fire-fighting system 5 can be water or a water-based solution. Consequently, in that case, the source of fire-fighting fluid 8 can possibly be mixing means (not shown).

In particular, the safety system 2 comprises sensor means (not shown) configured to detect a predefined overheating or fire ignition condition on a portion of the vehicle batteries and an electronic unit (not shown) electrically connected to the sensor means and configured to allow the connection between the fluid source 8 and the nozzles 7 based on the data acquired by the sensor means.

In particular, the electronic unit comprises processing means adapted to process the data acquired by the sensor means to control elements of the hydraulic circuit 9, in order to allow fluid connection between the source 8 and the nozzles 7, such as for example electronic control valves or pumping means.

In particular, the sensor means can comprise one or more of temperature sensors and/or thermal video cameras. Alternatively or in combination, smoke detectors can also be provided.

Consequently, the electronic unit is configured to detect a significant piece of data of the temperature of the vehicle batteries and consequently to control the supply of fluid to the nozzles 7 if the temperature detected is higher than a predefined temperature threshold.

Operation of the embodiment of the safety system and the test system according to the invention described above is as follows.

Once a potentially hazardous condition for fire ignition has been detected, the electronic unit allows fluid connection between the source 8 and the nozzles 7 to supply to them the pressurised fluid, which is sprayed around the entire vehicle 3. Said spray reduces propagation of the fire caused by the thermal runaway, increasing the intervention time for its management. In particular, the spray acts by suffocating the fire outbreak and cooling the vehicle batteries.

According to what is described above, the invention also relates to a control method of a safety system for a test system as described above, comprising the steps of:
i) Acquire through the sensor means a physical quantity value relating to a potential fire condition;
ii) Check this detected value against a predefined value stored in the electronic unit;
iii) If this detected value exceeds the predefined value, allow fluid communication between the source 8 and the nozzles 7, otherwise return to point i).

In particular, the steps of the method described above are performed continuously or at predefined intervals.

In particular, the aforementioned physical quantity is the temperature of said batteries. Alternatively or in combination, there can be the presence of smoke detected by a smoke detector.

The advantages of a safety system of a test system and a method according to the invention are clear from the above.

Thanks to the proposed system, it is possible to reach any point of the vehicle, and therefore to cool the batteries and to suffocate the fire outbreak.

In particular, compared to the known systems, it is possible efficiently to reach side and lower portions of the vehicle.

The use of high-pressure and/or supersonic nozzles allows a high spraying of the fire-fighting fluid, considerably improving the wetting capabilities to obtain the aforesaid effects.

The proposed system is also modular and versatile, as the columns and the nozzles can be arranged at different points, based on the dimensions of the vehicle.

In particular, the proposed safety system can free up the space above the vehicle to house further elements, such as cameras 11 for test measurements, without preventing their operation during use.

In conclusion, it is clear that changes and variants can be made to the safety system and to the test system according to the present invention without thus deviating from the scope of protection as defined by the claims.

For example, as already stated, the nozzles and the distribution columns can be placed in a different position and number with respect to what is claimed.

Clearly, the distribution columns could be supported by another wall of the building defining the space 2, for example along the longitudinal axis A along a side wall.

Furthermore, the platform can be of any type, as can the source of pressurised fire-fighting fluid or the hydraulic circuit.

## Claims

1. Test system (1) for a vehicle (3), said test system (1) being housed in a space (2) and said vehicle (3) extending along longitudinal, transversal and vertical axes (A, B, C),
**characterized in that** said test system (1) comprising a safety system (5) configured to spray a fire-fighting fluid around said vehicle (3) along said longitudinal, transversal and vertical axes (A, B, C), wherein said safety system (5) comprises a plurality of supersonic nozzles (7), said nozzles (7) being placed around said vehicle (1) along said longitudinal, transversal and vertical axes (A, B, C).

2. Test system according to claim 1, wherein said nozzles (7) are configured to spray a fluid at a pressure between 180 and 220 bar.

3. Test system according to one of claims 1 or 2, wherein said nozzles (7) are carried by at least one distribution column (6) extending along one of said longitudinal, transversal and vertical axes (A, B, C).

4. Test system according to claim 3, comprising a plurality of distribution columns (6) extending along said vertical axis (C) and placed around said vehicle (1) along said longitudinal and transversal axes (A, B).

5. Test system according to one of the previous claims, wherein said nozzles (7) are positioned along said vertical axis (C) at least at the height of a roof of said vehicle (1) and of the chassis of said vehicle (1).

6. Test system according to claim 3 or 4, wherein said nozzles (7) are carried by said at least one distribution column (6) in an adjustable manner along said distribution column (6).

7. Test system according to one of the previous claims, wherein said safety system (5) further comprises a source of pressurized fluid (8) fluidly connected to said nozzles (7) to supply said fire-fighting fluid at a predefined pressure value.

8. Test system according to claim 7, wherein said safety system (5) includes sensor means configured to detect a physical quantity that can be associated with a potential fire condition of a portion of said vehicle (3) and an electronic unit comprising processing means configured to acquire the data detected by said sensor means and consequently to control the fluid communication between said source (8) and said nozzles (9) based on said data.

9. Assembly of a vehicle (3) and a test system (1) according to one of the previous claims.

10. Control method of a safety system (5) according to claim 8 for a test system (1) according to claim 9, including the steps of:
i) Acquire through said sensor means a physical quantity value relating to a potential fire condition;
ii) Check this detected value against a predefined value stored in said electronic unit;
iii) If this detected value exceeds said predefined value, allow fluid communication between said source (8) and said nozzles (7), otherwise return to point i).

11. Method according to claim 10, wherein said physical quantity is a temperature of said portion of vehicle (3).

12. Method according to claim 10 or 11, wherein said vehicle portion (3) is a battery of said vehicle.

## Patentansprüche

1. Testsystem (1) für ein Fahrzeug (3), welches Testsystem (1) in einem Raum (2) untergebracht ist und wobei sich das Fahrzeug (3) entlang Längs-, Quer- und Vertikalachsen (A, B, C) erstreckt, **dadurch gekennzeichnet, dass** das Testsystem (1) ein Sicherheitssystem (5) umfasst, das konfiguriert ist, um ein Brandbekämpfungsfluid um das Fahrzeug (3) entlang der Längs-, Quer- und Vertikalachsen (A, B, C) zu sprühen, wobei das Sicherheitssystem (5) eine Vielzahl von Überschalldüsen (7) umfasst, und die Düsen (7) um das Fahrzeug (1) entlang der Längs-, Quer- und Vertikalachsen (A, B, C) angeordnet sind.

2. Testsystem nach Anspruch 1, wobei die Düsen (7) konfiguriert sind, um ein Fluid mit einem Druck zwischen 180 und 220 bar zu sprühen.

3. Testsystem nach einem der Ansprüche 1 oder 2, wobei die Düsen (7) von mindestens einer Verteilungssäule (6) getragen werden, die sich entlang einer der Längs-, Quer- und Vertikalachsen (A, B, C) erstreckt.

4. Testsystem nach Anspruch 3, umfassend eine Vielzahl von Verteilungssäulen (6), die sich entlang der Vertikalachse (C) erstrecken und um das Fahrzeug (1) entlang der Längs- und Querachsen (A, B) angeordnet sind.

5. Testsystem nach einem der vorhergehenden Ansprüche, wobei die Düsen (7) entlang der Vertikalachse (C) mindestens auf der Höhe eines Dachs des Fahrzeugs (1) und des Fahrgestells des Fahrzeugs (1) positioniert sind.

6. Testsystem nach Anspruch 3 oder 4, wobei die Düsen (7) von der mindestens einen Verteilungssäule (6) in einer einstellbaren Weise entlang der Verteilungssäule (6) getragen werden.

7. Testsystem nach einem der vorhergehenden Ansprüche, wobei das Sicherheitssystem (5) ferner eine Quelle von druckbeaufschlagtem Fluid (8) umfasst, die fluidisch mit den Düsen (7) verbunden ist, um das Brandbekämpfungsfluid mit einem vordefinierten Druckwert zuzuführen.

8. Testsystem nach Anspruch 7, wobei das Sicherheitssystem (5) Sensormittel, die konfiguriert sind, um eine physikalische Größe zu erfassen, die mit einem potentiellen Brandzustand eines Bereichs des Fahrzeugs (3) assoziiert werden kann, und eine elektronische Einheit umfasst, die Verarbeitungsmittel umfasst, die konfiguriert sind, um die von den Sensormitteln erfassten Daten zu erfassen und folglich die Fluidkommunikation zwischen der Quelle (8) und den Düsen (9) basierend auf den Daten zu steuern.

9. Anordnung eines Fahrzeugs (3) und eines Testsystems (1) nach einem der vorhergehenden Ansprüche.

10. Steuerverfahren eines Sicherheitssystems (5) nach Anspruch 8 für ein Testsystem (1) nach Anspruch 9, das die folgenden Schritte umfasst:
i) Erfassen eines physikalischen Größenwerts, der sich auf einen potentiellen Brandzustand bezieht, durch die Sensormittel;
iii) Abgleichen dieses erfassten Werts mit einem vordefinierten Wert, der in der elektronischen Einheit gespeichert ist;
iii) wenn dieser erfasste Wert den vordefinierten Wert überschreitet, Ermöglichen einer Fluidkommunikation zwischen der Quelle (8) und den Düsen (7), andernfalls Zurückkehren zu Punkt i).

11. Verfahren nach Anspruch 10, wobei die physikalische Größe eine Temperatur des Bereichs des Fahrzeugs (3) ist.

12. Verfahren nach Anspruch 10 oder 11, wobei der Bereich des Fahrzeugs (3) eine Batterie des Fahrzeugs ist.

## Revendications

1. Système d'essai (1) pour un véhicule (3), ledit système d'essai (1) étant logé dans un espace (2) et ledit véhicule (3) s'étendant le long d'axes longitudinal, transversal et vertical (A, B, C),
**caractérisé en ce que** ledit système d'essai (1) comprend un système de sécurité (5) configuré pour pulvériser un fluide de lutte contre l'incendie autour dudit véhicule (3) le long desdits axes longitudinal, transversal et vertical (A, B, C), dans lequel ledit système de sécurité (5) comprend une pluralité de buses (7) supersoniques, lesdites buses (7) étant placées autour dudit véhicule (1) le long desdits axes longitudinal, transversal et vertical (A, B, C).

2. Système d'essai selon la revendication 1, dans lequel lesdites buses (7) sont configurées pour pulvériser un fluide à une pression entre 180 et 220 bars.

3. Système d'essai selon l'une des revendications 1 ou 2, dans lequel lesdites buses (7) sont portées par au moins une colonne de distribution (6) s'étendant le long d'un desdits axes longitudinal, transversal et vertical (A, B, C).

4. Système d'essai selon la revendication 3, comprenant une pluralité de colonnes de distribution (6) s'étendant le long dudit axe vertical (C) et placées autour dudit véhicule (1) le long desdits axes longitudinal et transversal (A, B).

5. Système d'essai selon l'une des revendications précédentes, dans lequel lesdites buses (7) sont positionnées le long dudit axe vertical (C) au moins à la hauteur d'un toit dudit véhicule (1) et du châssis dudit véhicule (1).

6. Système d'essai selon la revendication 3 ou 4, dans lequel lesdites buses (7) sont portées par ladite au moins une colonne de distribution (6) d'une manière ajustable le long de ladite colonne de distribution (6).

7. Système d'essai selon l'une des revendications précédentes, dans lequel ledit système de sécurité (5) comprend en outre une source (8) de fluide sous pression reliée de manière fluidique auxdites buses (7) pour fournir ledit fluide de lutte contre l'incendie à une valeur de pression prédéfinie.

8. Système d'essai selon la revendication 7, dans lequel ledit système de sécurité (5) comprend des moyens capteurs configurés pour détecter une grandeur physique qui peut être associée à un état d'incendie potentiel d'une partie dudit véhicule (3), et une unité électronique comprenant des moyens de traitement configurés pour acquérir les données détectées par lesdits moyens capteurs et par conséquent pour commander la communication de fluide entre ladite source (8) et lesdites buses (9) sur la base desdites données.

9. Assemblage d'un véhicule (3) et d'un système d'essai (1) selon l'une des revendications précédentes.

10. Méthode de commande d'un système de sécurité (5) selon la revendication 8 pour un système d'essai (1) selon la revendication 9, comprenant les étapes consistant à :
i) acquérir par le biais desdits moyens capteurs une valeur de grandeur physique relative à un état d'incendie potentiel ;
ii) comparer cette valeur détectée à une valeur prédéfinie stockée dans ladite unité électronique ;
iii) si cette valeur détectée dépasse ladite valeur prédéfinie, permettre une communication de fluide entre ladite source (8) et lesdites buses (7), sinon revenir au point i).

11. Méthode selon la revendication 10, dans laquelle ladite grandeur physique est une température de ladite partie de véhicule (3).

12. Méthode selon la revendication 10 ou 11, dans laquelle ladite partie de véhicule (3) est une batterie dudit véhicule.
